(19) Europäisches Patentamt
European Patent Office
Office européen des brevets

(11) **EP 2 553 940 B1**

(12) **EUROPÄISCHE PATENTSCHRIFT**

(45) Veröffentlichungstag und Bekanntmachung des Hinweises auf die Patenterteilung:
**25.08.2021 Patentblatt 2021/34**

(51) Int Cl.:
***H04Q 11/00*** *(2006.01)*

(21) Anmeldenummer: **11704525.2**

(22) Anmeldetag: **27.01.2011**

(86) Internationale Anmeldenummer:
**PCT/DE2011/000077**

(87) Internationale Veröffentlichungsnummer:
**WO 2011/120483 (06.10.2011 Gazette 2011/40)**

(54) **VERFAHREN ZUR EINSTELLBAREN VERZÖGERUNG OPTISCHER SIGNALE, ZUGEHÖRIGE VORRICHTUNG UND VERWENDUNG DESSELBEN**

METHOD FOR ADJUSTABLY DELAYING OPTICAL SIGNALS, CORRESPONDING DEVICE AND USE THEREOF

PROCÉDÉ DE RÉGLAGE DU RETARD DE SIGNAUX OPTIQUES, DISPOSITIF CORRESPONDANT ET SON ULILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2010 DE 102010013727**

(43) Veröffentlichungstag der Anmeldung:
**06.02.2013 Patentblatt 2013/06**

(73) Patentinhaber: **Deutsche Telekom AG**
**53113 Bonn (DE)**

(72) Erfinder:
• BUNGE, Christian-Alexander
  **12157 Berlin (DE)**
• SCHNEIDER, Thomas
  **14552 Michendorf**
  **Ortsteil Wilhelmshorst (DE)**
• SCHUSTER, Matthias
  **86169 Augsburg (DE)**
• JAMSHIDI, Kambiz
  **04277 Leipzig (DE)**

(74) Vertreter: **Braun-Dullaeus, Karl-Ulrich**
**Braun-Dullaeus Pannen Emmerling**
**Patent- und Rechtsanwaltspartnerschaft mbB**
**Platz der Ideen 2**
**40476 Düsseldorf (DE)**

(56) Entgegenhaltungen:
**WO-A1-2011/047657**

• JAMSHIDI K ET AL: "Very large, tunable, positive and negative group delay for high-bandwidth signals", OPTICAL COMMUNICATION (ECOC), 2010 36TH EUROPEAN CONFERENCE AND EXHIBITION ON, IEEE, PISCATAWAY, NJ, USA, 19. September 2010 (2010-09-19), Seiten 1-3, XP031789539, ISBN: 978-1-4244-8536-9
• SAPERSTEIN R E ET AL: "Time-domain waveform processing by chromatic dispersion for temporal shaping of optical pulses", JOURNAL OF THE OPTICAL SOCIETY OF AMERICA B (OPTICAL PHYSICS) OPT. SOC. AMERICA USA, Bd. 22, Nr. 11, November 2005 (2005-11), Seiten 2427-2436, XP002638076, ISSN: 0740-3224
• GERAGHTY D F ET AL: "A Simplified Optical Correlator and Its Application to Packet-Header Recognition", IEEE PHOTONICS TECHNOLOGY LETTERS, IEEE SERVICE CENTER, PISCATAWAY, NJ, US, Bd. 20, Nr. 7, 1. April 2008 (2008-04-01), Seiten 487-489, XP011205152, ISSN: 1041-1135
• CHI H ET AL: "Symmetrical waveform generation based on temporal pulse shaping using amplitude-only modulator", ELECTRONICS LETTERS, IEE STEVENAGE, GB, Bd. 43, Nr. 7, 29. März 2007 (2007-03-29), Seiten 415-417, XP006028467, ISSN: 0013-5194, DOI: DOI:10.1049/EL:20073808

- LIU Y ET AL: "Continuous true-time-delay beamforming for phased array antenna using a tunable chirped fiber grating delay line", IEEE PHOTONICS TECHNOLOGY LETTERS AUGUST 2002 INSTITUTE OF ELECTRICAL AND ELECTRONICS ENGINEERS INC. US, Bd. 14, Nr. 8, August 2002 (2002-08), Seiten 1172-1174, XP002638077, DOI: DOI:10.1109/LPT.2002.1022008
- WEINER A M ET AL: "PROGRAMMABLE SHAPING OF FEMTOSECOND OPTICAL PULSES BY USE OF 128-ELEMENT LIQUID CRYSTAL PHASE MODULATOR", IEEE JOURNAL OF QUANTUM ELECTRONICS, IEEE SERVICE CENTER, PISCATAWAY, NJ, USA, vol. 28, no. 4, 1 April 1992 (1992-04-01), pages 908-920, XP000272715, ISSN: 0018-9197, DOI: 10.1109/3.135209
- WEINER A M: "Femtosecond pulse shaping using spatial light modulators", REVIEW OF SCIENTIFIC INSTRUMENTS, AIP, MELVILLE, NY, US, vol. 71, no. 5, 1 May 2000 (2000-05-01), pages 1929-1960, XP012038262, ISSN: 0034-6748, DOI: 10.1063/1.1150614

**Beschreibung**

Die vorliegende Erfindung betrifft ein Verfahren zur Verzögerung einzelner Lichtpulse, sowie eine Vorrichtung zur Durchführung des Verfahrens.

Die künstliche Verzögerung und damit letztendlich auch die Speicherung von Lichtpulsen hat einige interessante und wichtige Anwendungen in Wissenschaft und Technik. Zu nennen sind insbesondere die zeitaufgelöste Spektroskopie, das optische "Sampling" (Abtastung), die nichtlineare Optik, die optische Kohärenz-Tomographie und auch die optische Nachrichtentechnik. Dabei wird die Verzögerung und Speicherung optischer Pulspakete sogar als Schlüsseltechnologie für das zukünftige rein auf optischen Netzen aufbauendes Internet angesehen. So gibt es bei solchen optischen Übertragungsnetzen derzeit noch nicht die Möglichkeit der optischen Speicherung, die bei Blockierung einzelner Lichtpfade nötig ist, um die Pakete zu einem späteren Zeitpunkt zu senden oder umzurouten. Gleichzeitig bietet nur die optische Verzögerung von Pulsen die Möglichkeit, so genannte Phased-Array-Antennen mit extrem hohen Bandbreite zu betreiben.

Zur Verzögerung optischer Pulse sind unterschiedliche Mechanismen bekannt.

Zu nennen sind beispielsweise die Reflexion an einem Gitter, die Verzögerung in Resonatorstrukturen und die künstliche Verlangsamung der Gruppengeschwindigkeit in Materialsystemen und optischen Wellenleitern. Diese Verfahren unterscheiden sich bezüglich der maximalen Verzögerungszeit, dem Grad an Verzerrungen, die dem Puls zugefügt werden, der Geschwindigkeit der Änderung und der mögliche Kontrolle des Systems, sowie deren struktureller Komplexität.

In speziellen Systemen, wie beispielsweise in Bose-Einstein-Kondensaten, können Lichtpulse für kurze Zeit gespeichert werden. Diese Systeme gehen jedoch mit einem hohen experimentellen Aufwand einher und sind daher kaum in Praxix einsetzbar. Gleichzeitig muss die Frequenz des zu speichernden Lichts exakt mit der Resonanzfrequenz der Ionen oder Atome des Systems übereinstimmen. Eine Anwendung bei Wellenlängen, wie sie beispielsweise in der optischen Nachrichtentechnik eingesetzt werden, ist nahezu ausgeschlossen. Zudem sind die Resonanzfrequenzen der Ionen respektive der Moleküle besonders schmalbandig, so dass der Bandbreite der damit verzögerbaren optischen Pulse enge Grenzen gesetzt sind.

Im Gegensatz dazu arbeiten Verfahren, welche die Gruppengeschwindigkeit in optischen Wellenleitern herabsetzen, im gesamten Transparenzbereich des Wellenleiters. Solche Systeme sind flexibel. einsetzbar und besonders breitbandig. Ein Vorteil ist dabei, dass Wellenleiter Standardkomponenten der optischen Nachrichtentechnik sind, die problemlos in bestehende Systeme integriert werden können. Allerdings ist mit diesen Systemen keine verzerrungsfreie Verzögerung von mehr als einem Bit möglich.

Es ist auch bekannt, Pulse mit einer zeitlichen Dauer von 2 ns bis zu 12 ns in einer optischen Faser zu speichern. Dazu wird der Puls mit Hilfe der stimulierten Brillouin Streuung (SBS) in eine langlebige akustische Anregung der Faser "geschrieben". Diese Anregung, die in einer akustischen Welle in der Faser resultiert, kann mit einem zweiten Signal zeitlich verzögert abgefragt werden. Für diese Methode müssen der Schreib- und Abfragepuls eine große optische Leistung von mehreren Watt aufweisen. Derart hohe Leistungen lassen sich mit Standardkomponenten der Nachrichtentechnik kaum erzielen. Zudem ist die Speicherzeit durch die Lebenszeit der akustischen Anregung begrenzt, so dass größere Speicherzeiten nicht möglich sind.

Als weiteres Verfahren sind die "time prims" bekannt, welche die Dispersion eines Übertragungsmediums, beispielsweise einer optischen Faser, dazu nutzen, ein Signal zeitlich zu verzögern oder zu beschleunigen. Dabei wird das Eingangssignal durch eine zusätzlich aufgebrachte Phasenmodulation auf eine andere Trägerfrequenz konvertiert. Dieses frequenzversetzte Signal wird über ein Medium mit chromatischer Dispersion übertragen. Da bei der neuen Trägerfrequenz die Gruppenlaufzeit des Signals auf Grund der Dispersion verschieden ist, kann durch die Frequenzverschiebung und deren Richtung die Verzögerung respektive die Beschleunigung eingestellt werden. Im Anschluss an die Übertragung wird die Frequenzverschiebung durch eine weitere Phasenmodulation in umgekehrter Richtung kompensiert.

Ein darauf aufbauender Ansatz sieht die Umsetzung des Signals auf eine andere Wellenlänge vor, die bei einer gewissen Dispersion eine andere Laufzeit aufweist als die ursprüngliche Wellenlänge. Nach Akkumulieren der Dispersion bei dieser anderen Wellenlänge wird das Signal wieder auf die ursprüngliche Wellenlänge zurück konvertiert. Dadurch lassen sich Verzögerungen bis zu 720 ns einstellen, wobei der Aufwand insofern beträchtlich ist, als mindestens zwei weitere Laser mit einer möglichst geringen Linienbreite sowie einige optische Filter und Verstärker benötigt werden.

Indem die Zeit-Frequenz-Kohärenz des Signals ausgenutzt wird, ist die Quasi-Speicherung ganzer Pulsfolgen möglich. Dabei wird das Frequenzspektrum der Pulsfolge sehr schmalbandig äquidistant gefiltert, so dass im Idealfall ein Frequenzkamm entsteht, dessen nunmehr diskrete Frequenzanteile jeweils den gleichen Frequenzabstand aufweisen. Das entspricht einem periodischen Signal, das sich mit einer Fourier-Reihe mit der Grundfrequenz darstellen lässt. Im Idealfall wiederholt sich dadurch der Eingangpuls unendlich oft, wobei unter realen Bedingungen der maximale Zeitpunkt für die letzte Wiederholung durch die Breite der einzelnen Frequenzanteile begrenzt ist. Auf diese Weise können Frequenzanteile mittels des Brillouin-Effekts selektiv verstärkt und so Frequenzbreiten von wenigen 10 MHz erreicht werden. Dieses Vorgehen ermöglicht maximale Verzögerungen bis zu 100 ns. Allerdings wird das Signal nicht im eigentlichen Sinne verzögert sondern es wird eine später auftretende Kopie des Eingangssignals als verzögertes Ausgangssignals herausgefiltert. Dabei wird ein großer Anteil der Signalleistung verworfen, was insbesondere bei vielen Kopien des Eingangssignals dazu führen kann, dass das Signal-RauschVerhältnis schlecht wird.

Die schmalbandige äquidistante Filterung kann auch im Zeitbereich durchgeführt werden, indem die Frequenzanteile durch eine aufgebrachte akkumulierte chromatische Dispersion frequenzabhängig verzögert werden, so dass diese zu getrennten Zeitpunkten auftreten. Diese Methode kann zur Verzögerung optischer Signale eingesetzt werden, indem dieses hoch dispersive Signal periodisch zeitlich abgetastet wird, was einer äquidistanten Filterung im Frequenzbereich entspricht. Die aufgebrachte Dispersion wird nach der Abtastung durch Aufbringen der gleichen akkumulierten Dispersion mit umgekehrtem Vorzeichen kompensiert. Dieses Verfahren erzeugt auch Kopien des Ursprungssignals, von denen nur eine später auftretende Kopie des Eingangssignals als verzögertes Ausgangssignal herausgefiltert wird, so dass dieses Verfahren mit Verlusten einhergeht.

Für das optische Sampling wird ein ähnliches Verfahren benutzt, um das Signal zeitlich zu strecken. Hierbei erhält das eigentliche Signal eine zusätzlich Frequenzmodulation, die linear mit der Zeit ansteigt. Wenn dieses Signal chromatischer Dispersion ausgesetzt wird, werden die einzelnen Frequenzen unterschiedlich stark verzögert. Wenn die Frequenzmodulation so eingesetzt wird, dass die Frequenz des Signals langsam ansteigt, kann das Signal zeitlich gestreckt werden ("Photonic Time-Streck System", PTS).

Aus dem Artikel "A Simplified Optical Correlator and Its Application to Packet-Header Recognition" von David E. Geranghty et al. (IEEE Photonics Technology letters, Bd. 20, Nr. 7,1, April 2008) ist ein System bekannt, das sich der Transformation eines Pulspaketes in den Zeitbereich bedient und das im Zeitbereich eine Analyse des Inhalts des Pulspaketes durchführt. Eine gezielte Verzögerung optischer Signale ist nicht offenbart.

Aus dem Artikel "Femtosecond pulse shaping using spatial light modulators" von Andrew M. Weiner (Rev. Scient. Instr. 71, 5, 2000) ist ein System zur Verzögerung eines Signals in Form eines Lichtpulses bekannt bei dem das Signal zur Aufspaltung der Frequenzen zunächst einem Element mit chromatischer Dispersion ausgesetzt wird, dass die Frequenzkomponenten des Signals zeitlich verschiebt, wobei die Frequenzkomponenten des aufgespalteten Signals einer Phasenmodulation ausgesetzt sind, wobei die Phasenmodulation eine zeitlich ansteigende Phasenmodulation ist, mit der ein linearer Phasengang auf das zeitlich in seine Frequenzkomponenten aufgespalteten Signal aufgebracht wird.

Auch der Fachartikel "Time-domain waveform processing by chromatic dispersion for temporal shaping of optical pulses" von R.E. Saperstein et. al. (J. Opt. Soc. Am. B, 22, 11, 2005) beschreibt ein ähnliches Signalverzögerungssystem.

Die Aufgabe der vorliegenden Erfindung ist es, ein mit einfachen Mitteln kostengünstig umzusetzendes Verfahren zur Verzögerung eines Signals, das in Form eines Einzelpulses oder eines Pulspaketes vorliegt, vorzuschlagen, das große Verzögerungen bei geringem baulichem Aufwand ermöglicht.

Diese Aufgabe wird durch ein Verfahren mit den kennzeichnenden Merkmalen des Anspruchs 1 gelöst. Eine zugehörige Vorrichtung, mit der sich das Verfahren durchführen lässt, ist in Anspruch 2 definiert.

Das erfindungsgemäße Verfahren beruht zunächst darauf, dass chromatische Dispersion zu einem wellenlängenabhängigen respektive frequenzabhängigen Zeitversatz führt und dass durch die Einwirkung einer hohen akkumulierten Dispersion die einzelnen Frequenzkomponente eines Signals so stark zeitlich verschoben werden können, dass diese zu einzelnen Zeitpunkten gesondert nebeneinander und daher einzeln verarbeitet werden können. Das erfindungsgemäße Verfahren zur Verzögerung eines Signals in Form eines Lichtpulses oder eines Pulspaketes bedient sich somit in einem ersten Schritt einer Aufspaltung des Signals in Frequenzkomponenten, indem das Signal einem Element mit starker chromatischer Dispersion ausgesetzt wird.

Das so frequenzmäßig "gedehnte" Signal wird erfindungsgemäß weiter verarbeitet, indem zumindest einzelne Frequenzkomponenten des aufgespaltenen Signals einer Modulation ausgesetzt werden. Durch die Art der Modulation kann das letztendlich resultierende Signal gestaltet werden. Die Modulation ist eine zeitlich ansteigende Phasenmodulation, mit der auf einfache Weise ein linearer Phasengang auf das zeitlich in seine Frequenzanteile aufgespaltete Signal aufgebracht werden kann. Ein solcher Verlauf kann von einem rampenförmigen Ansteuersignal realisiert werden. Eine Verzögerung des Signals wird dabei durch einen lineareren Phasengang erzeugt, wobei gilt, je größer der Anstieg des linearen Phasengangs ist, desto größer ist die zeitliche Verzögerung.

Im letzten Schritt des erfindungsgemäßen Verfahrens wird die Dispersion wieder kompensiert, indem das derart bearbeitete Signal zur Kompensation der erzeugten Dispersion einem Element mit einer entsprechenden Dispersion umgekehrten Vorzeichens ausgesetzt wird.

Das erfindungsgemäße Verfahren ermöglicht somit die Verzögerung eines Signals durch einfache Steuerung des Phasen- und Frequenzgangs des Signals. Dabei kann das Signal ein Einzelpuls oder eines Pulspaket im Zeitbereich sein. Die einzelnen Frequenzanteile des Signals können zu verschiedenen Zeitpunkten einzeln verarbeitet werden. Das Verfahren ist besonders einfach und flexibel. Besonders vorteilhaft ist, dass sich zur Umsetzung Standardkomponenten der optischen Nachrichtentechnik nutzen lassen und dass eine relativ geringe optische Leistung ausreicht. Wenn keine Nichtlinearitäten einer Faser genutzt werden, kann die Leistung von einfachen Laserdioden geliefert werden. Somit kann das Verfahren in den meisten gängigen Telekommunikationssystemen eingesetzt und preiswert realisiert werden.

Das erfindungsgemäße Verfahren ist auch in seiner Bandbreite nicht begrenzt, so dass auch hochbitratige Datensignale verzögert respektive gespeichert werden können. Im Gegensatz zur Quasi-Lichtspeicherung ermöglicht das Verfahren eine einstellbare Verzögerung, die sehr schnell verändert werden kann und ist somit flexibel einsetzbar. Im Gegensatz zu bekannten Verfahren können Verzögerungen direkt realisiert werden, so dass die Herstellung und das Verwerfen vieler Signalkopien vermieden werden kann. Damit ergibt sich eine bessere Ausnutzung der zur Verfügung stehenden Leistung.

Das vorgeschlagene Verfahren lässt sich in der Telekommunikation für die rein optische Speicherung optischer Signale nutzen, die entweder weiter verarbeitet oder nur kurz zwischengespeichert werden müssen, weil beispielsweise der nachfolgende Netzwerkpfad blockiert ist. Das ist insbesondere für zukünftige "optical burst swiching" (OBS) und das "optical packet switching" (OPS) notwendig.

Da mit dem erfindungsgemäßen Verfahren nicht nur einzelne Verzögerungszeiten in grober Auflösung sondern kontinuierlich alle Verzögerungszeiten von Null bis zur Maximalzeit erreicht werden können, ist es auch möglich, optische Pakete oder Datenblöcke zu puffern und damit zu synchronisieren. Eine solche Synchronisierung und Pufferung ist in nahezu allen Übertragungssystemen und bei der Signalverarbeitung nötig. Sie geschieht bislang meist nach einer opto-elektrischen Wandlung im elektrischen System. Wenn jedoch wegen hoher Datenraten eine rein optische Signalverarbeitung vorgenommen werden soll, kann mit dem erfindungsgemäßen Verfahren auch ein Puffer zur Synchronisierung realisiert werden.

Das erfindungsgemäße Verfahren eignet sich nicht nur zum Speichern und Verzögern beliebiger optischer Signale, Pulse, Pulssequenzen und Pulsbursts sondern auch zur optischen Steuerung von "Phased-Array" Antennen, wobei deren Abstrahl- und Empfangscharakteristik verändert wird. Solche Antennen weisen ein ein- oder zweidimensionales Feld ("Array") gleichartiger Antennenelemente auf. Die Abstrahl- und Empfangscharakteristik eines solchen Antennenfeldes wird durch den komplexen Strom jedes einzelnen Elements des Arrays bestimmt. Zur Steuerung des komplexen Stroms müssen sowohl der Betrag als auch die Phase für jedes Element veränderbar sein. Sollen diese Antennen in einem breiten Frequenzbereich arbeiten, reicht die Änderung der Phase allerdings nicht aus, da diese nur für eine einzelne Frequenz gilt. Die Antenne zeigt unterschiedliche Abstrahl- und Empfangscharakteristiken für jede einzelne Frequenz, aus denen das breitbandige Signal besteht. Wird aber anstelle der Phase die Signallaufzeit gesteuert, ist der Array-Faktor frequenzunabhängig und die Antenne breitbandig.

Es gibt es eine Vielzahl von bekannten Methoden zur Zeitverschiebung der Ansteuersignale für Phased-Array-Antennen. Diese sind meist optisch und beruhen auf unterschiedlich langen Ausbreitungswegen, die durch Wellenleiter, die Reflexion an einem Gitter, oder die Piezoelektrische Verlängerung des Ausbreitungswegs erzeugt werden können. Im Gegensatz zur erfindungsgemäßen Vorgehensweise sind die bekannten Verfahren kompliziert, teuer und schwer zu steuern.

Eine weitere Anwendung des erfindungsgemäßen Verfahrens ist das "optische Sampling", bei dem ein. optischer Steuerpuls dafür sorgt, dass in einem kurzen Zeitintervall das abzutastende Signal durchgeschaltet wird. Mit der vorgeschlagenen Methode kann der Steuerpuls zuverlässig verzögert und so zu jedem beliebigen Zeitpunkt das Signal abgetastet werden. Ein großer Vorteil liegt darin, dass alternativ auch das optische Signal zeitlich verzögert werden kann und der sehr kurze und somit breitbandige Steuerpuls unverändert bleibt.

In optischen Computern, sogenannten Quantencomputern, werden optische Speicher benötigt, die mit der vorgeschlagenen Methode realisiert werden können.

Durch das Kaskadieren des erfindungsgemäßen Verfahrens lassen sich auch wesentlich längere Speicherzeiten als nur solche von wenige ns erreichen.

Die Erfindung wird nachfolgend anhand der Figuren 1 bis 4 näher erklärt. Es zeigen:

**Figur** 1      eine Dispersion im Frequenzraum,

Figur 2      einen schematischen Aufbau mit Modulator,

Figur 3      einen Aufbau mit einem über eine Rampe ansteuerbaren Modulator und

Figur 4      Ergebnisse einer Simulationsrechnung.

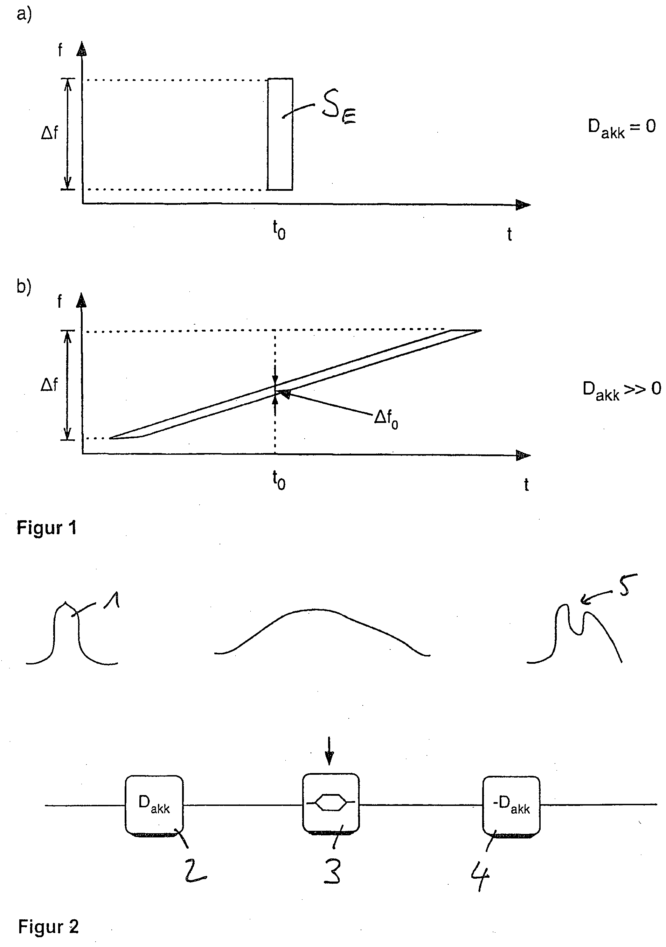

In Figur 1 ist zunächst unter a) ein Signal $S_E$ mit einer Frequenzbreite $\Delta f$ zur Zeit $t_0$ gezeigt. Zu erkennen ist, dass ohne akkumulierte Dispersion ($D_{akk} = 0$) alle Frequenzen nahezu zur gleichen Zeit $t_0$ auftreten. Hingegen werden bei hoher akkumulierter Dispersion ($D_{akk} \gg 0$) werden hohe Frequenzen schneller, so dass sich die einzelnen Frequenzanteile immer mehr über einen größeren Zeitbereich "verschmieren" und zu einem Zeitpunkt $t_0$ nur noch einzelne Frequenzanteile auftreten (Figur 1b). Je größer die auf das Signal $S_E$ aufgebrachte akkumulierte Dispersion $D_{akk}$ ist, desto stärker wird das Signal zeitlich "gedehnt" und desto weniger Frequenzkomponenten werden gleichzeitig zu einem

Zeitpunkt $t_0$ verarbeitet.

Dabei hängt die zeitliche Dehnung mit der Bandbreite B des Eingangssignals folgendermaßen zusammen:

$$\Delta t_{akk} = D_{akk} \cdot \frac{\lambda^2}{c} B \tag{1}$$

wobei $\lambda$ die Wellenlänge des Eingangssignals und c die Lichtgeschwindigkeit ist. Die Dehnung ist somit proportional zur Bandbreite des Eingangssignals. Gleichzeitig ist das zum Zeitpunkt $t_0$ auftretende Frequenzintervall $\Delta f_0$ (s. Figur 1) ebenfalls proportional zur Bandbreite B:

$$\Delta f_0 = B \frac{\Delta \tau}{\Delta t_{akk}} = \frac{\Delta \tau \cdot \lambda}{2\pi \cdot D_{akk}} \tag{2}$$

wobei $\Delta_T$ die zeitliche Dauer des Eingangssignals gemäß Figur 1 darstellt. Somit ist für eine bestimmte akkumulierte Dispersion das $\Delta f_0$ unabhängig von der Bandbreite des Signals. Da die Auflösung von der zeitlichen Dauer $\Delta_T$ linear abhängig ist, werden mit der erfindungsgemäßen Verfahrensweise vorteilhafterweise Datenpakete und keine kontinuierlichen Signale mit langer Dauern bearbeitet. Derartige Datenpakete haben eine Anzahl n von Bits mit einer Gesamtdauer von

$$\Delta \tau = n \cdot T_0 \tag{3}$$

einer Bitdauer $T_0$, so dass die zeitliche Dauer eines solchen Datenpakets linear mit der Datenrate und damit die Anforderung an die benötigte akkumulierte Dispersion abnehmen wird.

Erfindungsgemäß wird somit ein Eingangssignal $S_E$ zunächst mit einer akkumulierten chromatischen Dispersion $D_{akk}$ belegt. Diese wird durch eine Standard-Singlemodefaser (SSMF) vorgegebener Länge hervorgerufen.

In Figur 2 ist ein Eingangssignal 1 gezeigt, dem durch das Mittel 2, eine Standard-Singlemodefaser, eine akkumulierte Dispersion ($D_{akk}$) aufgeprägt wird. Im Mittel 3 erfolgt eine Modulation des I- und des Q- Anteils aller Frequenzanteile des Signales $S_E$ im Zeitbereich. Dem solchermaßen modulierten Signal wird eine negative Dispersion ($-D_{akk}$) durch das Mittel 4 aufgeprägt, so dass das zunächst gedehnt Eingangssignal 1 wieder zu einem gegenüber dem Ausgangssignal zeitlich veränderten Signal 5 gestaucht wird.

Nachdem das Eingangssignal zeitlich gedehnt wurde und die einzelnen Frequenzkomponenten zu separaten Zeitpunkten vorliegen, können diese im Zeitbereich verarbeitet werden. Zur Verzögerung des Eingangssignals wird dieses mit einem linearen Phasengang belegt, indem eine proportional zur Frequenz verlaufende Phasenmodulation aufgebracht wird. Dabei ist zu beachten, dass durch Umkehr des Vorzeichens der Phasenmodulation sich auch Beschleunigungen realisieren lassen, so dass sich das Signal sowohl in positive als auch in negative Zeitrichtung verschieben läßt. Das resultiert daraus, dass die Beschleunigung nicht absolut ist, sondern sich auf ein Signal bezieht, das ohne zusätzliche Phasenmodulation durch die vorgeschlagene Vorrichtung läuft.

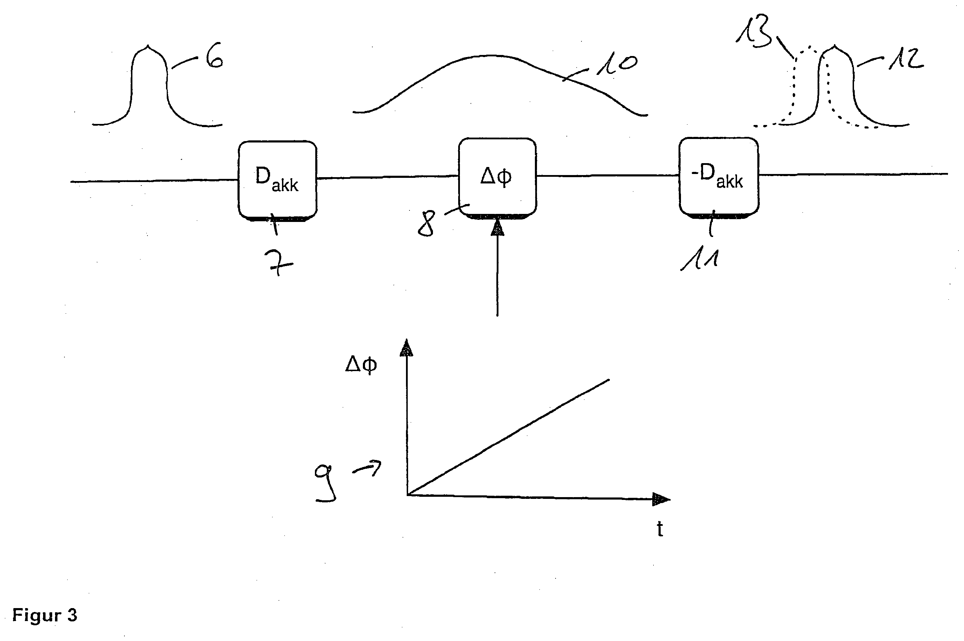

In Figur 3 ist nunmehr ein ähnlicher Aufbau wie in Figur 2 gezeigt, in dem ein Eingangssignal 6 einem dispersiven Mittel 7 zugeführt wird. Danach findet eine Phasenmodulation im Modulator 8 statt, der mit dem elektrischen Rampensignal 9 angesteuert wird. Die Dispersion des "gedehnten" und in der Dehnung modulierten Signals 10 wird durch das Mittel 11 wieder kompesiert, so dass ein im Vergleich zum Eingangssignal 12 verzögertes Signal 13 entsteht.

Erfindungsgemäß kann der lineare Phasengang durch eine zeitlich ansteigende Phasenmodulation realisiert werden. Für eine große akkumulierte Dispersionen steigt die Frequenz des Signals mit jedem Zeitschritt dt um

$$\frac{df}{dt} = \frac{B}{\Delta t_{akk}} = \frac{c}{\lambda^2 \cdot D_{akk}} \tag{4}$$

an. Für eine Zeitverzögerung $_T$ muss dem Signal eine lineare Phasenmodulation mit einer Frequenzabhängigkeit von

$$\Delta\varphi(f) = 2\pi \cdot \tau \cdot f \quad \text{mit} \quad \varphi_{max} \approx 2\pi \cdot \tau \cdot B \qquad (5)$$

aufgebracht werden. Für eine Verzögerung von $_\tau$ = 1 ns wäre demnach bei einem 1-Gb/s -Signal eine maximale Phasendrehung von $\Delta\varphi_{max} = 2_\Pi$ nötig. Ist die Bitrate 10 Gb/s, verzehnfacht sich der maximal benötigte Phasenversatz. Das Zeitsignal zum Aufbringen der Phasenmodulation muss dann folgendermaßen aussehen:

$$\Delta\varphi(t) = -\frac{\tau \cdot c}{\lambda^2 D_{akk}} \cdot t \qquad (6)$$

Da nicht die absolute Phase, sondern die Phasenänderung pro Zeit, also die Steigung, entscheidend ist, wird ein Sägezahnsignal aufgebracht, beispielsweise:

$$\Delta\varphi(t) = -\frac{\tau \cdot c}{\lambda^2 D_{akk}} \cdot [t - \text{floor}(t)] \qquad (7)$$

So kann die maximale Phasenmodulation klein gehalten werden. Es muss allerdings möglichst schnell vom Maximalwert der Phasenmodulation wieder auf Null zurückgeschaltet werden.

Nach der Modulation des Signals muss die aufgebrachte akkumulierte Dispersion durch eine der genannten Methoden kompensiert werden. Die Kompensation der Dispersion erfolgt durch Aufbringen der gleichen Dispersion mit umgekehrtem Vorzeichen.

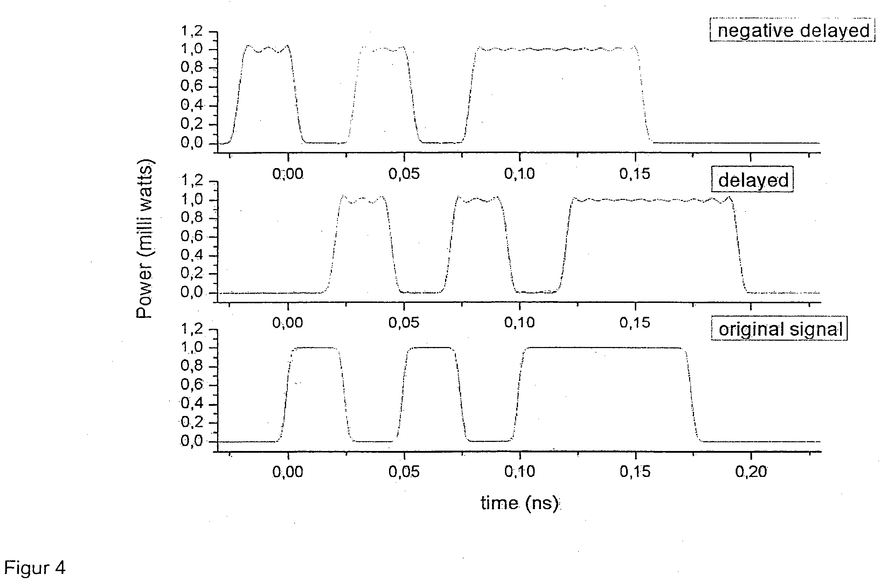

Untersuchungen mittels numerischer Simulationen zeigen, dass sowohl positive als auch negative Verzögerungen möglich sind. In Figur 4 sind beispielhaft zwei Simulationsergebnisse zur Verzögerung respektive Beschleunigung um 45 ps dargestellt. Die Signalverzerrungen (leichtes "Ringing") lassen sich durch Optimierung des Aufbaus unterdrücken.

Soll sowohl die Amplitude als auch die Phase des Signals verarbeitet werden, muss das mit akkumulierter Dispersion belegte Signal mittels einer IQ-Modulation, insbesondere mit Doppel-Mach-Zehnder-Struktur, moduliert werden. Alternativ kann sequentiell die Amplitude, beispielsweise mit einem Dual-Drive-Mach-Zehnder-Modulator, und dann die Phase, beispielsweise direkt in Lithiumniobat oder InP, moduliert werden. Dabei ist zu beachten, dass der Modulator genau mit dem Signal synchronisiert sein muss, damit das zeitliche Modulationssignal auch auf die richtigen Frequenzkomponenten angewandt wird, die schließlich nur zu speziellen Zeitpunkten auftreten.

Das erfindungsgemäße Verfahren ist einfach umsetzbar, da zum Aufbringen der akkumulierten Dispersion alle bekannten Verfahren der Dispersionskompensation eingesetzt werden können und sowohl IQ-Modulatoren als auch gewöhnliche Phasenmodulatoren integrierbar sind. Alle für das erfindungsgemäße Verfahren benötigten Komponenten sind Standardkomponenten der optischen Nachrichtentechnik und erfordern keine weitere Entwicklung.

In Figur 4 ist eine rechnerische Simulation gezeigt, bei der ein Eingangssignal mit drei Pulsen (unten) mittels des erfindungsgemäßen Verfahrens einmal verzögert (mitte) und einmal beschleunigt (oben) wird.

**Patentansprüche**

1. Verfahren zur Verzögerung eines Signals (6) in Form eines Lichtpulses wobei das Signal zur Aufspaltung der Frequenzkomponenten zunächst einem ersten Element (7) mit chromatischer Dispersion, $D_{akk}$, ausgesetzt wird, das die Frequenzkomponenten des Signals zeitlich verschiebt, dass die Frequenzkomponenten des aufgespaltenen Signals einer Phasenmodulation ausgesetzt werden, und dass das derart bearbeitete Signal (10) zur Kompensation der erzeugten Dispersion einem zweiten Element (11) mit einer entsprechenden chromatischen Dispersion umgekehrten Vorzeichens, $-D_{akk}$, ausgesetzt wird, dass die Phasenmodulation eine zeitlich ansteigende Phasenmodulation ist, mit der ein linearer Phasengang auf das zeitlich in seine Frequenzkomponenten aufgespaltene Signal aufgebracht wird, wobei die zeitlich ansteigende Phasenmodulation durch einen Phasenmodulator (8) mit einem Sägezahnsignal realisiert wird
**dadurch gekennzeichnet, dass** die chromatische Dispersion im ersten Element (7) durch eine Standard-Singlemodefaser (SSMF) vorgegebener Länge hervorgerufen wird.

2. Vorrichtung zur Durchführung des Verfahrens nach Anspruch 1, enthaltend ein erstes Element (7) mit chromatischer Dispersion, $D_{akk}$, einen Modulator (8), eingerichtet zur zeitlich ansteigenden Phasenmodulation der einzelner Frequenzkomponenten mittels eines Sägezahnsignals, und ein zweites Element (11) mit chromatischer Dispersion umgekehrten Vorzeichens, -$D_{akk}$, **gekennzeichnet dadurch, dass** das erstes Element (7) eine Lichtleiterstruktur enthaltend eine Standard-Singlemodefaser (SSMF) vorgegebener Länge umfasst.

**3.** Verwendung des Verfahrens nach Anspruch 1 zur optischen Steuerung von "Phased-Array" Antennen.

**Claims**

**1.** Method for delaying a signal (6) in the form of a light pulse,
wherein in order to split the frequency components the signal is first exposed to a first element (7) with chromatic dispersion, $D_{akk}$, which causes the frequency components of the signal to shift temporally,
the frequency components of the split signal undergo a phase modulation, and
the signal (10) which has been processed in this way is exposed to a second element (11) with a corresponding chromatic dispersion with inverse prefix , -$D_{akk}$, to compensate for the dispersion produced,
the phase modulation is a temporally rising phase modulation, with which a linear phase response is applied to a signal which has been split temporally into its frequency components,
wherein the temporally rising phase modulation is realised by a phase modulator (8) with a sawtooth signal,
**characterized in that**
the chromatic dispersion in the first element (7) is brought about by a standard single-mode fibre (SSMF) of predefined length.

**2.** Apparatus for carrying out the method according to Claim 1, including first element (7) with chromatic dispersion, $D_{akk}$, a modulator (8) configured for the temporally rising phase modulation of the individual frequency components by means of a sawtooth signal, and a second element (11) with chromatic dispersion with inverse prefix -$D_{akk}$,
**characterized in that**
the first element (7) comprises an optical fibre structure which contains a standard single-mode fibre (SSMF) of predefined length.

**3.** Use of the method according to Claim 1 for the optical control of "phased array" antennas.

**Revendications**

**1.** Procédé pour retarder un signal (6) sous la forme d'une impulsion lumineuse,
dans lequel le signal à des fins de séparation des composantes fréquentielles est d'abord exposé à un élément (7) avec dispersion chromatique, $D_{akk}$, qui décale les composantes fréquentielles du signal dans le temps,
de sorte que les composantes fréquentielles du signal divisé soient soumises à une modulation de phase et
que le signal (10) traité de cette manière est exposé à un deuxième élément (11) avec une dispersion chromatique correspondante de signe opposé, -$D_{akk}$, de sorte que la modulation
de phase soit une modulation de phase qui augmente dans le temps, avec laquelle une réponse de phase linéaire est appliquée au signal qui est temporellement divisé en ses composantes de fréquence,
dans lequel la modulation de phase qui augmente dans le temps est réalisée par modulateur de phase (8) avec un signal en dents de scie,
**caractérisé en ce que**
la dispersion chromatique dans le premier élément (7) est provoquée par une fibre monomode standard (SSMF) de longueur prédéterminée.

**2.** Dispositif pour la mise en œuvre du procédé selon la revendication 1, contenant un premier élément (7) avec dispersion chromatique, $D_{akk}$, un modulateur conçu pour la modulation de phase (8) croissante dans le temps des composantes fréquentielles individuelles au moyen d'un signal en dents de scie, un deuxième élément (11) avec dispersion chromatique de signe opposé, -$D_{akk}$,
**caractérisé en ce que**
le premier élément (7) comprend une structure de guide de lumière contenant une fibre monomode standard (SSMF) de longueur prédéterminée.

**3.** Utilisation du procédé selon la revendication 1 pour la commande optique des antennes à commande de phase.

a)

$D_{akk} = 0$

b)

$D_{akk} \gg 0$

**Figur 1**

**Figur 2**

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DAVID E. GERANGHTY et al.** A Simplified Optical Correlator and Its Application to Packet-Header Recognition. *IEEE Photonics Technology letters,* 01. April 2008, vol. 20 (7
- **ANDREW M. WEINER.** Femtosecond pulse shaping using spatial light modulators. *Rev. Scient. Instr.,* 2000, vol. 71, 5

- **R.E. SAPERSTEIN.** Time-domain waveform processing by chromatic dispersion for temporal shaping of optical pulses. *J. Opt. Soc. Am. B,* 22. November 2005